# EUROPEAN PATENT SPECIFICATION

(11) **EP 2 894 934 B1**
(45) Date of publication and mention of the grant of the patent: **09.08.2017**
(21) Application number: 12886551.6
(22) Date of filing: 16.10.2012
(51) Int. Cl.: H04W 48/20, H04W 76/00

(54) **GROUP AREA MANAGEMENT METHOD, DEVICE AND SYSTEM**
GRUPPENBEREICHSVERWALTUNGSVERFAHREN, -VORRICHTUNG UND -SYSTEM
PROCÉDÉ, DISPOSITIF ET SYSTÈME DE GESTION DE ZONE DE GROUPE

(43) Date of publication of application: 15.07.2015
(73) Proprietor: Huawei Technologies Co., Ltd., Longgang District Shenzhen, Guangdong 518129 (CN)
(72) Inventor: GU, Rongting, Shenzhen Guangdong 518129 (CN); WEN, Hua, Shenzhen Guangdong 518129 (CN); ZHU, Qian, Shenzhen Guangdong 518129 (CN)
(74) Representative: Thun, Clemens
(86) International application number: PCT/CN2012/083041
(87) International publication number: WO 2014/059607

(56) References cited:
- EP-A1- 1 838 034
- EP-A1- 2 299 743
- EP-A1- 2 424 316
- EP-A2- 1 326 462
- CN-A- 101 141 688
- CN-A- 101 370 170
- CN-A- 102 652 420
- US-A1- 2005 037 728
- US-A1- 2007 197 200
- US-A1- 2012 155 364

## Description

### TECHNICAL FIELD

This application relates to the communications field, and in particular, to a group area management method, device, and system.

### BACKGROUND

In trunking communications, a mode in which a group is established for multiple users, and in each group session, only one user in the group is a speaker, and all other users act as audiences is used. In such a mode, users of a group that belong to a same base station (cell) may share a same downlink channel, which can significantly save radio resources, and therefore, the mode is widely applied in departments such as government, energy, public security, and railway.

For example, EP 2 299743A1 refers to a method and cellular communication network for providing broadcast content to a mobile terminal. A broadcast content network hub located in a network element of the radio access network of the cellular communication network receives the broadcast content from a broadcast content source external to the cellular communication network. It provides the broadcast content to the mobile terminal over a user connection.

In the prior art, a trunking system based on time division-synchronous code division multiple access (TD-SCDMA, Time Division-Synchronous Code Division Multiple Access) is provided to implement trunking communications. However, with development of a long term evolution (LTE, Long Term Evolution) system, a large part of market of the TD-SCDMA system will be seized by the LTE system, but the trunking communications is still not implemented in the LTE system.

According to whether a group call area is restricted, an LTE-based trunking communications design is categorized into two major types. One type is trunking communications based on a fixed area. A base station (cell) covered by the trunking communications based on a fixed area remains unchanged. A member of a group that joins a trunk when opening an account can perform trunking communications only in a cell covered by a specified base station.

The other type is trunking communications based on a mobile area, where a member of a group that joins a trunk is determined when opening an account, but the member of the group can move randomly. In a scope reachable by a network, the member of the group can perform trunking communications, which means a base station (cell) to which the member of the group belongs during a call is not limited. In the trunking communications system, base stations (cells) in which the trunking communications are performed should be known, so that base stations that may obtain trunking communications resources are determined so as to perform trunking communications, which is a group area management problem.

Therefore, to implement LTE-based trunking communications, group area management problems in these two scenarios need to be solved first. Generally, group-related area management is primarily group paging, group call notification, group resource allocation, and group handover. However, no LTE-based group area management method is provided in the prior art.

### SUMMARY

A technical problem that is primarily solved by this application is providing a group area management method, device, and system to solve an LTE-based group area management problem.

In a first aspect a group area management method is provided, the method comprising:
receiving, by a mobility management entity, MME, a multicast address generated by a multimedia broadcast multicast service, MBMS, gateway;
encapsulating, by the MME, the multicast address and an area list into an MBMS session initiation request message, wherein the area list is a cell list or the area list comprises a cell list and a tracking area list; and
sending, by the MME, the MBMS session initiation request message to a multi-cell/multicast coordination entity, MCE, so that the MCE finds a corresponding base station according to the area list and sends the MBMS session initiation request message to the corresponding base station, and the base station is able to join the multicast address.

In a first implementation form of the first aspect the method comprises:
receiving, by the MME, a group identifier sent by a trunking management unit; and
encapsulating, by the MME, the group identifier into the MBMS session initiation request message, so that the MCE sends the group identifier to a user equipment in a cell through the base station, and the user equipment determines whether to establish a connection with the base station.

In a second implementation form of the first aspect, before encapsulating the multicast address and the area list into the MBMS session initiation request message, the method comprises:
receiving, by the MME, the cell list sent by a trunking management unit, and using the cell list as the area list; or
receiving, by the MME, a member list sent by a trunking management unit; and querying a state of a member according to the member list, generating the cell list according to a cell in which a connected-state member is located, generating the tracking area list according to a tracking area in which an idle-state member is located, and using the cell list and the tracking area list as the area list.

In a third implementation form of the first aspect, after sending the MBMS session initiation request message to the MCE, the method further comprises:
determining, by the MME, whether the area list is updated; and
when the area list is updated, encapsulating, by the MME, the updated area list into an MBMS session update request message, and sending the MBMS session update request message to the MCE.

In a fourth implementation form of the first aspect the MBMS session initiation request message sent by the MCE to the corresponding base station excludes the area list.

A second aspect refers to a group area management method, the method comprising:
receiving, by a multi cell/multicast coordination entity, MCE, a multimedia broadcast multicast service, MBMS, session initiation request message sent by a mobility management entity, MME, wherein the MBMS session initiation request message carries an area list and a multicast address, and the area list is a cell list or the area list comprises a cell list and a tracking area list;
reading, by the MCE, the area list from the MBMS session initiation request message; and
searching, by the MCE, for a corresponding base station according to the area list, and sending the MBMS session initiation request message to the base station, so that the base station is able to join the multicast address.

In a first implementation form of the second aspect reading the area list from the MBMS session initiation request message comprises:
reading the cell list and the tracking area list from the MBMS session initiation request message; and
searching for the corresponding base station according to the area list comprises:
   searching, according to the cell list, for a base station that belongs to the cell list, and searching, according to the tracking area list, for a base station that belongs to the tracking area list.

In a second implementation form of the second aspect the method further comprises:
receiving an MBMS session update request message sent by the MME; and
reading an updated area list from the MBMS session update request message.

In a third implementation form of the second aspect the MBMS session initiation request message sent to the base station excludes the area list.

A third aspect refers to a mobility management entity, MME, comprising a receiving module, an encapsulating module, and a sending module, wherein:
the receiving module is configured to: receive a multicast address generated by a multimedia broadcast multicast service, MBMS, gateway, and send the multicast address to the encapsulating module;
the encapsulating module is configured to: receive the multicast address, encapsulate the multicast address and an area list into an MBMS session initiation request message, and send the MBMS session initiation request message to the sending module, wherein the area list is a cell list or the area list comprises a cell list and a tracking area list; and
the sending module is configured to: receive the MBMS session initiation request message, and send the MBMS session initiation request message to a multi-cell/multicast coordination entity, MCE, so that the MCE finds a corresponding base station according to the area list and sends the MBMS session initiation request message to the corresponding base station, and the base station is able to join the multicast address.

In a first implementation form of the third aspect the receiving module is further configured to: receive a group identifier sent by a trunking management unit, and send the group identifier to the encapsulating module;
the encapsulating module is further configured to: encapsulate the group identifier into the MBMS session initiation request message, and send the MBMS session initiation request message to the sending module; and
the sending module is configured to: receive the MBMS session initiation request message, and send the MBMS session initiation request message to the MCE, so that the MCE sends the group identifier to a user equipment in a cell through the base station, and the user equipment determines whether to establish a connection with the base station.

In a second implementation form of the third aspect the receiving module is further configured to receive the cell list sent by a trunking management unit, and use the cell list as the area list.

In a third implementation form of the third aspect the MME further comprises a generating module;
the receiving module is further configured to: receive a member list sent by a trunking management unit, and send the member list to the generating module; and
the generating module is configured to: receive the member list, query a state of a member according to the member list, generate the cell list according to a cell in which a connected-state member is located, generate the tracking area list according to a tracking area in which an idle-state member is located, and use the cell list and the tracking area list as the area list.

In a fourth implementation form of the third aspect the generating module is configured to:
after receiving the member list, immediately query the state of the member according to the member list, generate the cell list according to the cell in which the connected-state member is located, and generate the tracking area list according to the tracking area in which the idle-state member is located; or
when all members are in a connected state, generate the cell list according to a cell in which connected-state members are located, wherein the MME further comprises a first determining module configured to: query the state of the member according to the member list, determine whether all the members are in the connected state, and send a first determining result to the generating module; or
when a set time is exceeded, query the state of the member according to the member list, generate the cell list according to the cell in which the connected-state member is located, and generate the tracking area list according to the tracking area in which the idle-state member is located, wherein the MME further comprises a second determining module configured to determine whether the set time is exceeded and send a second determining result to the generating module.

In a fifth implementation of the third aspect form the MME further comprises a third determining module;
the third determining module is configured to determine whether the area list is updated, and send a third determining result to the encapsulating module;
the encapsulating module is further configured to: receive the third determining result, and when the area list is updated, encapsulate the updated area list into an MBMS session update request message, and send the MBMS session update request message to the sending module; and
the sending module is further configured to: receive the MBMS session update request message, and send the MBMS session update request message to the MCE.

In a sixth implementation form of the third aspect the MBMS session initiation request message sent by the MCE to the corresponding base station excludes the area list.

In a fourth aspect a multi-cell/multicast coordination entity, MCE, is provided comprising a receiving module, a reading module, a searching module, and a sending module, wherein:
the receiving module is configured to: receive a multimedia broadcast multicast service, MBMS, session initiation request message sent by a mobility management entity, MME, and send the MBMS session initiation request message to the reading module, wherein the MBMS session initiation request message carries an area list and a multicast address, and the area list is a cell list or the area list comprises a cell list and a tracking area list;
the reading module is configured to: receive the MBMS session initiation request message, read the area list from the MBMS session initiation request message, and send the area list to the searching module;
the searching module is configured to: receive the area list, search for a corresponding base station according to the area list, and send a found base station to the sending module; and
the sending module is configured to: receive the found base station, and send the MBMS session initiation request message to the base station, so that the base station is able to join the multicast address.

In a first implementation of the fourth aspect the reading module is configured to: read a cell list and a tracking area list from the MBMS session initiation request message, and send the cell list and the tracking area list to the searching module; and
the searching module is configured to: receive the cell list and the tracking area list, and search, according to the cell list, for a base station that belongs to the cell list, and search, according to the tracking area list, for a base station that belongs to the tracking area list.

In a second implementation of the fourth aspect the receiving module is further configured to: receive an MBMS session update request message sent by the MME, and send the MBMS session update request message to the reading module; and
the reading module is further configured to: receive the MBMS session update request message, and read an updated cell list and an updated tracking area list from the MBMS session update request message.

In a third implementation of the fourth aspect the MBMS session initiation request message sent to the base station excludes the area list.

According to the foregoing solution, a multicast address and an area list are encapsulated into a multimedia broadcast multicast service session initiation request message, and then the multimedia broadcast multicast service session initiation request message is sent to a multi-cell/multicast coordination entity, so that the multi-cell/multicast coordination entity can obtain, from the area list, a scope of base stations (cells) that participate in trunking communications, and then find a corresponding base station by using the multi-cell/multicast coordination entity and send the multicast address to the base station, and the base station is able to join the multicast address, thereby implementing group area management and further implementing trunking communications.

A fourth aspect provides an MCE, including a receiving module, a reading module, a searching module, and a sending module, where the receiving module is configured to receive a multimedia broadcast multicast service session initiation request message sent by a mobility management entity; and the receiving module sends the multimedia broadcast multicast service session initiation request message to the reading module, where the multimedia broadcast multicast service session initiation request message carries an area list and a multicast address; the reading module is configured to: receive the multimedia broadcast multicast service session initiation request message, and read the area list from the multimedia broadcast multicast service session initiation request message, and the reading module sends the area list to the searching module; the searching module is configured to: receive the area list, and search for a corresponding base station according to the area list, and the searching module sends a found base station to the sending module; and the sending module is configured to receive the found base station, and send the multimedia broadcast multicast service session initiation request message to the base station, so that the base station is able to join the multicast address, thereby implementing group area management.

In a first possible implementation manner of the fourth aspect, the reading module is further configured to read a cell list and a tracking area list from the multimedia broadcast multicast service session initiation request message, and the reading module sends the cell list and the tracking area list to the searching module; and the searching module is further configured to: receive the cell list and the tracking area list, and search, according to the cell list, for a base station that belongs to the cell list, and search, according to the tracking area list, for a base station that belongs to the tracking area list.

With reference to the first possible implementation manner of the fourth aspect, in a second possible implementation manner, the receiving module is further configured to receive a multimedia broadcast multicast service session update request message sent by the mobility management entity, and the receiving module sends the multimedia broadcast multicast service session update request message to the reading module; and the reading module is further configured to: receive the multimedia broadcast multicast service session update request message, and read an updated area list from the multimedia broadcast multicast service session update request message.

A fifth aspect provides a mobility management entity, including: a receiver, a processor, a sender, and a memory, where the receiver is configured to receive a multicast address generated by a multimedia broadcast multicast service gateway, and the receiver sends the multicast address to the processor; the processor is configured to receive the multicast address and encapsulate the multicast address and an area list into a multimedia broadcast multicast service session initiation request message, and the processor is configured to send the multimedia broadcast multicast service session initiation request message to the sender; the sender is configured to: receive the multimedia broadcast multicast service session initiation request message, and send the multimedia broadcast multicast service session initiation request message to an MCE, so that the MCE finds a corresponding base station according to the area list and sends the multimedia broadcast multicast service session initiation request message to the corresponding base station, and the base station is able to join the multicast address, thereby implementing group area management. The memory is configured to store a routine and data.

In a first possible implementation manner of the fifth aspect, the receiver is further configured to receive a group identifier sent by a trunking management unit, and the receiver sends the group identifier to the processor; the processor is further configured to encapsulate the group identifier into the multimedia broadcast multicast service session initiation request message, and the processor sends the multimedia broadcast multicast service session initiation request message to the sender; and the sender is configured to: receive the multimedia broadcast multicast service session initiation request message, and send the message to the MCE, so that the MCE sends the group identifier to a user equipment in a cell through the base station, and the user equipment determines whether to establish a connection with the base station.

In a second possible implementation manner of the fifth aspect, the receiver is further configured to receive a cell list sent by a trunking management unit, and use the cell list as the area list.

In a third possible implementation manner of the fifth aspect, the receiver is further configured to receive a member list sent by a trunking management unit, and the receiver sends the member list to the processor; and the processor is configured to: receive the member list, query a state of a member according to the member list, generate a cell list according to a cell in which a connected-state member is located, generate a tracking area list according to a tracking area in which an idle-state member is located, and use the cell list and the tracking area list as the area list.

With reference to the third possible implementation manner of the fifth aspect, in a fourth possible implementation manner, the processor is further configured to: after receiving the member list, immediately query the state of the member according to the member list, generate the cell list according to the cell in which the connected-state member is located, and generate the tracking area list according to the tracking area in which the idle-state member is located.

With reference to the third possible implementation manner of the fifth aspect, in a fifth possible implementation manner, the processor is further configured to: query the state of the member according to the member list, determine whether all members are in a connected state, and when all the members are in the connected state, generate the cell list according to a cell in which connected-state members are located.

With reference to the third possible implementation manner of the fifth aspect, in a sixth possible implementation manner, the processor is further configured to: determine whether a set time is exceeded; if the set time is exceeded, query the state of the member according to the member list, generate the cell list according to the cell in which the connected-state member is located, and generate the tracking area list according to the tracking area in which the idle-state member is located.

With reference to the third possible implementation manner of the fifth aspect, in a seventh possible implementation manner, the processor is further configured to: determine whether the area list is updated; and when the area list is updated, encapsulate the updated area list into a multimedia broadcast multicast service session update request message, and the processor sends the multimedia broadcast multicast service session update request message to the sender. The sender is further configured to: receive the multimedia broadcast multicast service session update request message, and send the multimedia broadcast multicast service session update request message to the MCE.

With reference to the seventh possible implementation manner of the fifth aspect, in an eighth possible implementation manner, the processor is further configured to query whether the state of the member is changed, and when the state of the member is changed, determine whether the area list is updated.

With reference to the seventh possible implementation manner of the fifth aspect, in a ninth possible implementation manner, the processor is further configured to: when a handover request message sent by a user equipment is received, determine whether the user equipment is a last member of a group in a base station to which the user equipment belongs, and update the area list if the user equipment is the last member of the group in the base station to which the user equipment belongs.

With reference to the seventh possible implementation manner of the fifth aspect, in a tenth possible implementation manner, the processor is further configured to: when a forwarding relocation request message is received, determine whether a user equipment is a first member of a group in a target cell, and update the area list if the user equipment is the first member of the group in the target cell.

A sixth aspect provides an MCE, including a receiver, a processor, a sender, and a memory. The receiver is configured to receive a multimedia broadcast multicast service session initiation request message sent by a mobility management entity, and the receiver sends the multimedia broadcast multicast service session initiation request message to the processor, where the multimedia broadcast multicast service session initiation request message carries an area list and a multicast address; the processor is configured to receive the multimedia broadcast multicast service session initiation request message, read the area list from the multimedia broadcast multicast service session initiation request message, and search for a corresponding base station according to the area list, and the processor sends the found base station to the sender; the sender is configured to: receive the found base station, and send the multimedia broadcast multicast service session initiation request message to the base station, so that the base station is able to join the multicast address, thereby implementing group area management. The memory is configured to store a routine and data.

In a first possible implementation manner of the sixth aspect, the processor is further configured to: read a cell list and a tracking area list from the multimedia broadcast multicast service session initiation request message; search, according to the cell list, for a base station that belongs to the cell list; and search, according to the tracking area list, for a base station that belongs to the tracking area list.

With reference to the first possible implementation manner of the sixth aspect, in a second possible implementation manner, the receiver is further configured to receive a multimedia broadcast multicast service session update request message sent by the mobility management entity, and the receiver sends the multimedia broadcast multicast service session update request message to the processor; and the processor is further configured to: receive the multimedia broadcast multicast service session update request message, and read an updated area list from the multimedia broadcast multicast service session update request message.

A seventh aspect provides a group area management system, including a trunking management unit, a multimedia broadcast multicast service gateway, a mobility management entity, an MCE, and a base station, where the trunking management unit is coupled to the multimedia broadcast multicast service gateway, the mobility management entity, and the base station separately, the multimedia broadcast multicast service gateway is coupled to the mobility management entity and the base station separately, the mobility management entity is coupled to the MCE and the base station separately, the MCE is coupled to the base station, and the mobility management entity is any foregoing mobility management entity.

In a first possible implementation manner of the seventh aspect, the MCE is any foregoing MCE.

According to the foregoing solution, a multicast address and an area list are encapsulated into a multimedia broadcast multicast service session initiation request message, and then the multimedia broadcast multicast service session initiation request message is sent to a multi-cell/multicast coordination entity, so that the multi-cell/multicast coordination entity can obtain, from the area list, a scope of base stations (cells) that participate in trunking communications, and then find a corresponding base station by using the multi-cell/multicast coordination entity and send the multicast address to the base station, and the base station is able to join the multicast address, thereby implementing group area management and further implementing trunking communications.

### BRIEF DESCRIPTION OF DRAWINGS

FIG. 1 is an interaction diagram of an implementation manner of a group call method according to the present invention;
FIG. 2 is a flowchart of an implementation manner of a group area management method according to the present invention;
FIG. 3 is a flowchart of another implementation manner of a group area management method according to the present invention;
FIG. 4 is an interaction diagram of another implementation manner of a group call method according to the present invention;
FIG. 5 is an interaction diagram of an implementation manner of area management in a group handover method according to the present invention;
FIG. 6 is a schematic structural diagram of an implementation manner of a mobility management entity according to the present invention;
FIG. 7 is a schematic structural diagram of another implementation manner of a mobility management entity according to the present invention;
FIG. 8 is a schematic structural diagram of an implementation manner of a multi-cell/multicast coordination entity according to the present invention;
FIG. 9 is a schematic structural diagram of still another implementation manner of a mobility management entity according to the present invention; and
FIG. 10 is a schematic structural diagram of another implementation manner of a multi-cell/multicast coordination entity according to the present invention.

### DESCRIPTION OF EMBODIMENTS

In the following description, to illustrate rather than limit, specific details such as a particular system structure, an interface, and a technology are provided to make a thorough understanding of the present invention. However, it should be understood by a person skilled in the art that the present invention can also be implemented in other embodiments without the specific details. In other cases, detailed descriptions of well known apparatuses, circuits, and methods are omitted, so that the present invention is described without being disturbed by the unnecessary details.

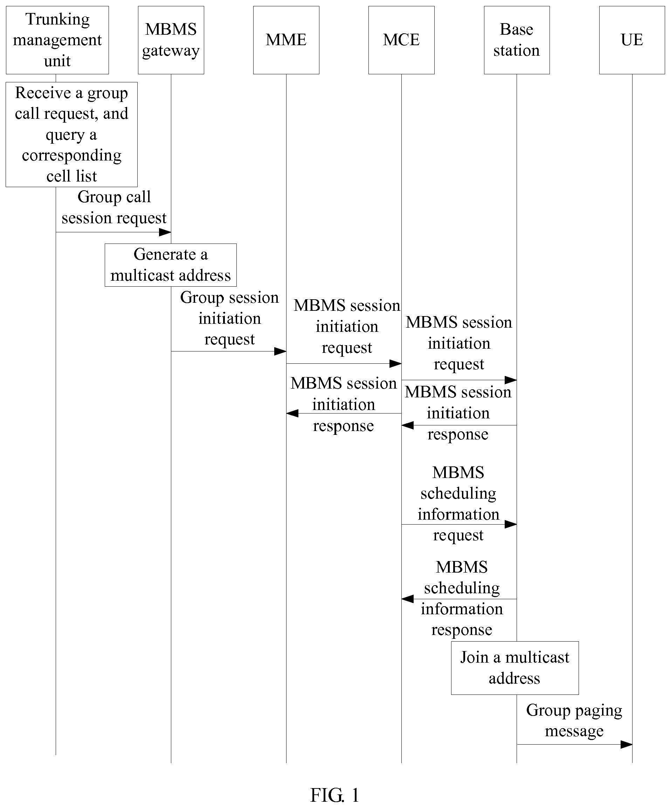

Refer to FIG. 1. FIG. 1 is an interaction diagram of an implementation manner of a group call method according to the present invention. An implementation manner of the group call method according to the present invention relates to: a trunking management unit, a multimedia broadcast multicast service (MBMS, Multimedia Broadcast Multicast Service) gateway, a mobility management entity (MME, Mobility Management Entity), a multi-cell/multicast coordination entity (MCE, Multi-cell/Multicast Coordination Entity), a base station (such as an eNodeB), and a user equipment (UE). The interaction diagram in FIG. 1 is applicable to group paging in trunking communications based on a fixed area. When opening an account, the UE joins a group and becomes a member of the group. Because the trunking communications based on a fixed area restricts that the group can perform trunking communications only in a cell covered by a specified base station, the UE serving as a member of the group can perform trunking communications only in the cell covered by the specified base station.

Serving as a speaker, a member in the cell covered by the specified base station puts forward a group call request to the trunking management unit. After receiving the group call request, the trunking management unit obtains a group identifier of the group, and queries a cell list corresponding to this group call locally (because the trunking communications can be performed only in the cell covered by the specified base station, an address of the specified base station may be pre-stored in the trunking management unit), where an address of a base station corresponding to the group call is stored in the cell list. The trunking management unit encapsulates the group identifier and a member list into a group call session request message, and sends the message to the MBMS gateway.

After receiving the group call session request message, the MBMS gateway generates a multicast address for the group, encapsulates the multicast address, the group identifier, and the cell list into a group session initiation request message, and sends the message to the MME.

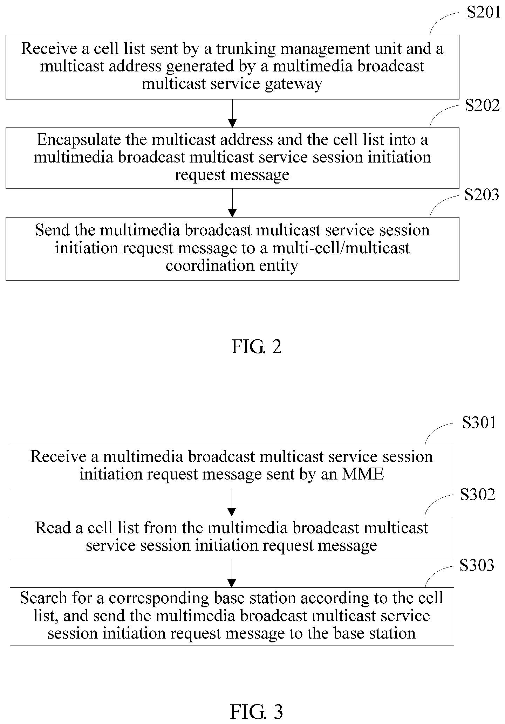

Also refer to FIG. 2. FIG. 2 is a flowchart of an implementation manner of a group area management method according to the present invention. An implementation manner of the group area management method according to the present invention includes the following steps:
S201. An MME receives a cell list sent by a trunking management unit and a multicast address generated by an MBMS gateway.

The MME receives a group session initiation request message sent by the MBMS gateway, so as to obtain a group identifier and the cell list that are sent by the trunking management unit, and the multicast address generated by the MBMS gateway.

S202. The MME encapsulates the multicast address and the cell list into a multimedia broadcast multicast service session initiation request message.

After obtaining the group identifier, the cell list, and the multicast address, the MME uses the cell list as an area list, and encapsulated the cell list together with the group identifier and the multicast address into the multimedia broadcast multicast service session initiation request message.

S203. The MME sends the multimedia broadcast multicast service session initiation request message to an MCE.

After encapsulating the multimedia broadcast multicast service session initiation request message, the MME sends the multimedia broadcast multicast service session initiation request message to the MCE.

Also refer to FIG. 3. FIG. 3 is a flowchart of another implementation manner of a group area management method according to the present invention. Another implementation manner of the group area management method according to the present invention includes the following steps:
S301. An MCE receives a multimedia broadcast multicast service session initiation request message sent by an MME.
S302. The MCE reads a cell list from the multimedia broadcast multicast service session initiation request message.

After receiving the multimedia broadcast multicast service session initiation request message, the MCE reads the cell list from the multimedia broadcast multicast service session initiation request message.

S303. The MCE searches for a corresponding base station according to the cell list, and sends the multimedia broadcast multicast service session initiation request message to the base station.

The MCE finds base stations in the cell list sequentially according to the cell list, and sends the multimedia broadcast multicast service session initiation request message (excluding the cell list) to all the base stations separately. Subsequently, the MCE sends a multimedia broadcast multicast service session initiation response message to the MME to notify the MME that the multimedia broadcast multicast service session initiation request message has been received.

After receiving the multimedia broadcast multicast service session initiation request message sent by the MCE, the base station sends a multimedia broadcast multicast service session initiation response message to the MCE to notify the MCE that the multimedia broadcast multicast service session initiation request message has been received. Subsequently, the base station reads a group identifier and a multicast address from the multimedia broadcast multicast service session initiation request message. The base station encapsulates the group identifier into a group paging message, and sends the message to all UEs in a cell. After receiving a multimedia broadcast multicast service scheduling information request sent by the MCE, the base station joins the multicast address, and sends a multimedia broadcast multicast service scheduling information response to the MCE to establish a trunking communications channel. From this time, a packet sent by a speaker may be sent to a specified base station through the trunking communications channel.

A UE in a cell covered by the specified base station receives the group paging message, and reads the group identifier from the group paging message. If the UE detects that the group identifier is a group identifier that the UE has (when the UE joins a group when opening an account, the UE obtains a group identifier corresponding to the group), the UE establishes a connection with the base station, and serves as an audience to receive the packet sent by the speaker; and if the UE detects that the group identifier is not a group identifier that the UE has, the group identifier is ignored.

Scopes of a group call notification and group resource allocation of trunking communications based on a fixed area are predefined scopes. After the MME sends the predefined scopes to the MCE, the MCE performs group call notification and group resource allocation according to the predefined scopes.

When a group handover is performed within a scope included in the cell list, a handover process is the same as a handover process of an original LTE system. However, if the group handover goes beyond the scope included in the cell list, the handover will fail.

According to the foregoing solution, a multicast address and an area list are encapsulated into a multimedia broadcast multicast service session initiation request message, and then the multimedia broadcast multicast service session initiation request message is sent to a multi-cell/multicast coordination entity, so that the multi-cell/multicast coordination entity can obtain, from the area list, a scope of base stations (cells) that participate in trunking communications, and then find a corresponding base station by using the multi-cell/multicast coordination entity and send the multicast address to the base station, and the base station is able to join the multicast address, thereby implementing group area management and further implementing trunking communications.

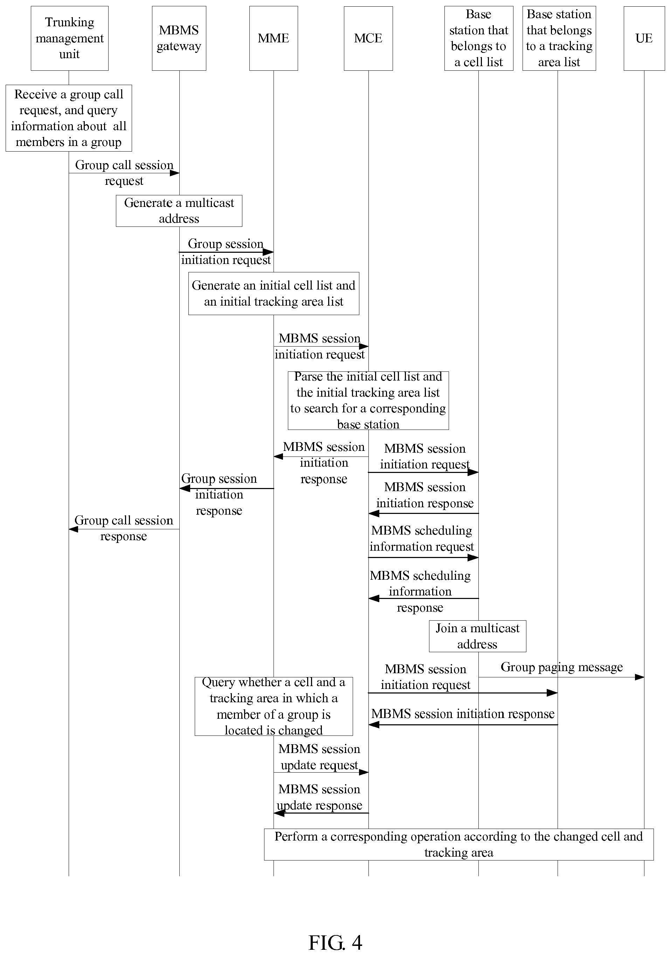

Refer to FIG. 4. FIG. 4 is an interaction diagram of another implementation manner of a group call method according to the present invention. An implementation manner of the group call method according to the present invention relates to: a trunking management unit, an MBMS gateway, an MME, an MCE, a base station that belongs to a cell list, a base station that belongs to a tracking area list, and a UE. The interaction diagram in FIG. 4 is applicable to group paging in trunking communications based on a mobile area. When opening an account, the UE joins a group and becomes a member of the group. The trunking communications based on a mobile area is different from the trunking communications based on a fixed area, and trunking communications does not need to be performed in an area covered by a specified base station (cell). Actually, the trunking communications can be performed in any area covered by an LTE network.

Serving as a speaker, a member in a group in an area covered by an LTE network puts forward a group call request to the trunking management unit. After receiving the group call request, the trunking management unit obtains a group identifier of the group, and queries information about all members of the group locally to obtain a member list. The trunking management unit encapsulates the group identifier and the cell list into a group call session request message, and sends the message to the MBMS gateway.

After receiving the group call session request message, the MBMS gateway generates a multicast address for the group, encapsulates the multicast address, the group identifier, and the member list into a group session initiation request message, and sends the message to the MME.

After receiving the member list sent by the trunking management unit, the MME queries a state of a member according to the member list. When the member is in a connected state (also called an online state), the MME can obtain a cell in which the member is located; and when the member is in an idle state (also called an offline state), the MME can obtain only a tracking area in which the member is located(a tracking area generally includes cells covered by multiple base stations). Therefore, a cell list that belongs to the area list is generated according to a cell in which a connected-state member is located, a tracking area list that belongs to the area list is generated according to a tracking area in which an idle-state member is located, and the cell list and the tracking area list are used as the area list.

Specifically, after receiving the member list sent by the trunking management unit, the MME first generates an initial cell list and an initial tracking area list. For example, after receiving the member list, the MME immediately queries the state of the member according to the member list, generates the cell list according to the cell in which the connected-state member is located, and generates the tracking area list according to the tracking area in which the idle-state member is located, where "immediately" means within a shortest time for the MME to react without undergoing any other steps after the MME receives the member list. In another implementation manner, after receiving the member list, the MME queries the state of the member, determines whether all members are in a connected state, and if not all the members are in the connected state, the MME keeps waiting until all the members are in the connected state; if all the members are in the connected state, the MME generates the cell list according to a cell in which connected-state members is located. In still another implementation manner, after receiving the member list, the MME sets a time, and determines whether the set time is exceeded. If the set time is not exceeded, the MME keeps waiting until the set time is exceeded; and if the set time is exceeded, the MME queries the state of the member according to the member list, generates the cell list according to the cell in which the connected-state member is located, and generates the tracking area list according to the tracking area in which the idle-state member is located. The MME encapsulates the group identifier, the area list (including the cell list and the tracking area list) together with the multicast address into the multimedia broadcast multicast service session initiation request message. After encapsulating the multimedia broadcast multicast service session initiation request message, the MME sends the multimedia broadcast multicast service session initiation request message to the MCE.

Subsequently, the MME periodically queries whether the cell list and the tracking area list are updated. For example, when a member of a group that originally belongs to a tracking area changes from an idle state to a connected state, the MME needs to determine whether the area list is updated. In this case, the MME queries whether the state of the member is changed, and determines that the state of the member is changed, and then, the MME needs to further determine whether the area list is updated. If the member is a last member of a group in the tracking area, the area list is updated; otherwise, the area list is not updated; and if the member is a first member of a group in a cell, the area list is updated; otherwise, the area list is not updated. If the area list is updated, the MME encapsulates the updated area list into a multimedia broadcast multicast service session update request message, and then sends the message to the MCE.

If the MCE receives the multimedia broadcast multicast service session initiation request message, the MCE reads the cell list and the tracking area list from the multimedia broadcast multicast service session initiation request message; finds, according to the cell list, a base station that belongs to the cell list; and finds, according to the tracking area list, a base station that belongs to the tracking area list. After completion of the searching, the MCE sends the multimedia broadcast multicast service session initiation request message (excluding the cell list and the tracking area list) to the found base station. If the MCE receives the multimedia broadcast multicast service session update request message, the MCE obtains an updated area list from the multimedia broadcast multicast service session update request message; if a base station in the obtained updated cell list already exists, the MCE sends a resource release indication to the base station; if a base station in the obtained updated cell list does not exist, the MCE sends the multimedia broadcast multicast service session initiation request message (excluding the cell list and the tracking area list) to the base station; if a tracking area in the obtained updated tracking area list already exists, the MCE performs no processing; if a tracking area in the obtained updated tracking area list does not exist, the MCE sends the multimedia broadcast multicast service session initiation request message (excluding the cell list and the tracking area list) to the base station in the tracking area.

After receiving the multimedia broadcast multicast service session initiation request message sent by the MCE, the base station that belongs to the cell list sends a multimedia broadcast multicast service session initiation response message to the MCE to notify the MCE that the multimedia broadcast multicast service session initiation request message has been received. Subsequently, the base station reads the group identifier and the multicast address from the multimedia broadcast multicast service session initiation request message. The base station encapsulates the group identifier into a group paging message, and sends the message to all UEs in a cell. After receiving a multimedia broadcast multicast service scheduling information request sent by the MCE, the base station joins the multicast address, and sends a multimedia broadcast multicast service scheduling information response to the MCE to establish a trunking communications channel. From this time, a packet sent by a speaker may be sent to a specified base station through the trunking communications channel.

After receiving the multimedia broadcast multicast service session initiation request message sent by the MCE, the base station that belongs to the tracking area list reads the group identifier from the multimedia broadcast multicast service session initiation request message, encapsulates the group identifier into a group paging message, and sends the message to UEs of all cells in the tracking area. Subsequently, the base station that belongs to the tracking area list sends a multimedia broadcast multicast service session initiation response message to the MCE to notify the MCE that the multimedia broadcast multicast service session initiation request message has been received.

A connected-state UE receives the group paging message, and reads the group identifier from the group paging message. If the UE detects that the group identifier is a group identifier that the UE has (if the UE joins a group when opening an account, the UE obtains a group identifier corresponding to the group), the UE establishes a connection with the base station that belongs to the cell list, and serves as an audience to receive the packet sent by the speaker; and if the UE detects that the group identifier is not a group identifier that the UE has, the group identifier is ignored. An idle-state UE receives the group paging message, and reads the group identifier from the group paging message. If the UE detects that the group identifier is a group identifier that the UE has, the UE changes from the idle state to the connected state; and if the UE detects that the group identifier is not a group identifier that the UE has, the group identifier is ignored.

A scope of a group call notification of trunking communications based on a mobile area is a combined set of the cell list and the tracking area list, and the MME performs area management in a same way, and then, the MME sends the scope of the group call notification to the MCE, and the MCE sends the group call notification to a corresponding base station (cell) according to the scope of the group call notification.

A scope of group resource allocation of trunking communications based on a mobile area is a scope included in the cell list, and the MME performs area management in a same way, and then, the MME sends the scope of the group resource allocation to the MCE, and the MCE allocates a group resource to a corresponding base station (cell) according to the scope of the group resource allocation.

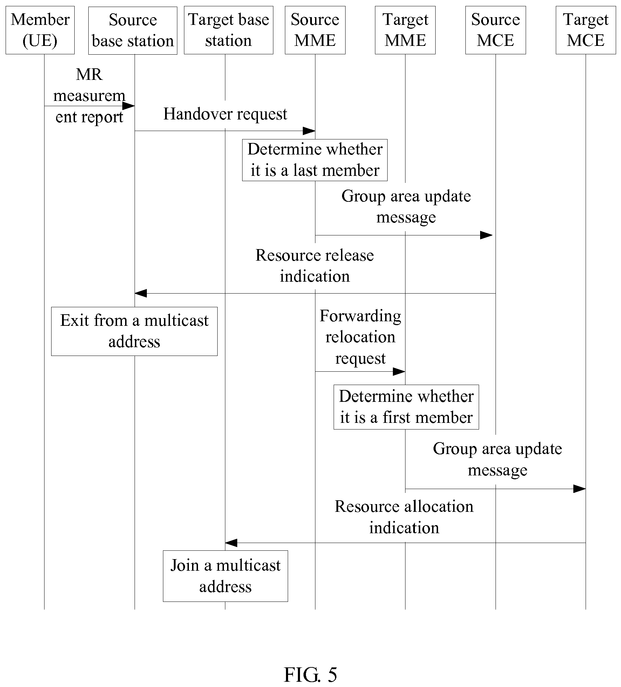

In group handover of trunking communications based on a mobile area, in addition to performing handover according to a conventional LTE system handover process, area management also needs to be performed. Refer to FIG. 5. FIG. 5 is an interaction diagram of an implementation manner of area management in a group handover method according to the present invention. Entities of the interaction include: a member (such as a UE), a source base station, a target base station, a source MME, a target MME, a source MCE, and a target MCE.

A UE, serving as a member of a group, sends an MR measurement report to the source base station. After receiving the MR measurement report, the source base station sends a handover request to the source MME. After receiving the handover request, the source MME determines whether a UE that needs to perform handover is a last member of a group in a base station to which the UE belongs. If the UE is the last member of the group, the source MME updates an area list, and sends a group area update message to the source MCE; and if the UE is not the last member of the group, the source MME sends no group area update message to the source MCE. For example, when a connected-state member moves from a scope covered by an original base station to a scope covered by another base station, the MME needs to determine whether the area list is updated. If the connected-state member moves from the scope covered by the original base station to a scope covered by a base station in another cell list, the area list is not updated; and if the connected-state member moves from the scope covered by the original base station to a scope covered by another base station that does not belong to the cell list, the MME determines that the area list is updated. If the source MCE receives a group area update message, the source MCE sends a resource release indication to the source base station. After receiving the resource release indication, the source base station releases a group resource and exits the multicast address. If the handover fails, if the source base station still receives no new group area update message sent by the source MCE, the source base station ignores the new group area update message sent by the source MCE and related to the group; and if the source base station already receives the new group area update message sent by the source MCE but has not delivered it to members in the cell formally, the delivery stops; and if the source base station already receives the new group area update message sent by the source MCE and has delivered it to the members in the cell, the source base station immediately delivers a former group area update message to the members in the cell.

The source MME continues to send a forwarding relocation request message to the target MME. After receiving the forwarding relocation request message, the target MME determines whether the UE is a first member of a group in a target cell; if the UE is the first member of the group, the target MME updates the area list and sends a group area update message to the target MCE; if the UE is not the first member of the group, the target MME does not send a group area update message to the target MCE. If the target MCE receives the group area update message, the target MCE sends a resource allocation indication to the target base station. After receiving the resource allocation indication, the target base station obtains the group resource and joins the multicast address. If the handover fails, if the target base station still receives no new group area update message sent by the target MCE, the target base station ignores the new group area update message sent by the target MCE and related to the group; if the target base station already receives the new group area update message sent by the target MCE but has not delivered it to members in the cell formally, the delivery stops; and if the target base station already receives the new group area update message sent by the target MCE and has delivered it to the members in the cell, the target base station immediately delivers a former group area update message to the members in the cell.

By using the foregoing solution, geographical limitation on the trunking communications can be broken, and members can perform trunking communications in a scope covered by an LTE network, which greatly improves flexibility of trunking communications.

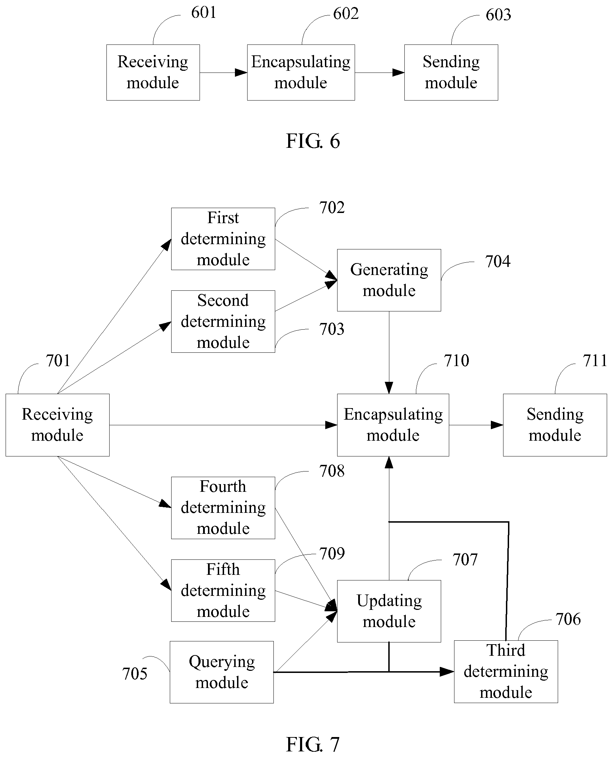

Refer to FIG. 6. FIG. 6 is a schematic structural diagram of an implementation manner of a mobility management entity according to the present invention. The mobility management entity according to this implementation manner includes a receiving module 601, an encapsulating module 602, and a sending module 603.

The receiving module 601 is configured to receive a multicast address generated by a multimedia broadcast multicast service gateway, and the receiving module 601 sends the multicast address to the encapsulating module 602.

The encapsulating module 602 is configured to receive the multicast address and encapsulate the multicast address and an area list into a multimedia broadcast multicast service session initiation request message, and the encapsulating module 602 is configured to send the multimedia broadcast multicast service session initiation request message to the sending module 603.

The sending module 603 is configured to: receive the multimedia broadcast multicast service session initiation request message, and send the multimedia broadcast multicast service session initiation request message to a multi-cell/multicast coordination entity, so that the multi-cell/multicast coordination entity finds a corresponding base station according to the area list and sends the multicast address to the corresponding base station, and the base station is able to join the multicast address, thereby implementing group area management.

According to the foregoing solution, a multicast address and an area list are encapsulated into a multimedia broadcast multicast service session initiation request message, and then the multimedia broadcast multicast service session initiation request message is sent to a multi-cell/multicast coordination entity, so that the multi-cell/multicast coordination entity can obtain, from the area list, a scope of base stations (cells) that participate in trunking communications, and then find a corresponding base station and send the multicast address to the base station, so that the base station is able to join the multicast address, thereby implementing group area management and further implementing trunking communications.

Refer to FIG. 7. FIG. 7 is a schematic structural diagram of another implementation manner of a mobility management entity according to the present invention. The mobility management entity according to this implementation manner includes a receiving module 701, a first determining module 702, a second determining module 703, a generating module 704, a querying module 705, a third determining module 706, an updating module 707, a fourth determining module 708, a fifth determining module 709, an encapsulating module 710, and a sending module 711.

The receiving module 701 is configured to receive a group identifier and a member list that are sent by a trunking management unit, and a multicast address generated by a multimedia broadcast multicast service gateway. For example, serving as a speaker, a member in a group in an area covered by an LTE network puts forward a group call request to a trunking management unit. After receiving the group call request, the trunking management unit obtains a group identifier of the group, and queries information about all members of the group locally to obtain the member list. The trunking management unit encapsulates the group identifier and the member list into a group call session request message, and sends the message to an MBMS gateway. After receiving the group call session request message, the MBMS gateway generates a multicast address for the group, encapsulates the multicast address, the group identifier, and the member list into a group session initiation request message, and sends the message to the MME. Then the receiving module 701 receives the group session initiation request message and hence receives the group identifier and the member list that are sent by the trunking management unit, and the multicast address generated by the multimedia broadcast multicast service gateway.

After receiving the group session initiation request message, the MME generates an initial area list in three manners. In a first manner, after receiving the member list, the MME immediately invokes the generating module 704 to generate the initial area list, where "immediately" means within a shortest time for the MME to react without undergoing any other steps after the MME receives the member list. In a second manner, the MME determines, by using the first determining module 702, whether all members are in a connected state, and if not all the members are in the connected state, the MME keeps waiting until all the members are in the connected state; if all the members are in the connected state, the MME invokes the generating module 704 to generate a cell list according to a cell in which a connected-state member is located, and uses the cell list as an area list. In a third manner, the MME determines, by using the second determining module 703, whether a set time is exceeded; if the set time is exceeded, the MME queries a state of a member by querying the member list, invokes the generating module 704 to generate a cell list according to a cell in which a connected-state member is located and generates a tracking area list according to a tracking area in which an idle-state member is located, and uses the cell list and the tracking area list as area list. The encapsulating module 710 is configured to encapsulate the multicast address and the generated area list into a multimedia broadcast multicast service session initiation request message, and send the multimedia broadcast multicast service session initiation request message to the sending module 711.

The querying module 705 is configured to query whether the state of the member is changed, and the querying module 705 sends a query result to the third determining module 706. The third determining module 706 is configured to: receive the query result, and when the state of the member is changed, determine whether the area list is updated. For example, when a member of a group that originally belongs to the tracking area changes from an idle state to a connected state, the MME needs to determine whether the area list is updated. In this case, the querying module 705 queries whether the state of the member is changed, and if the state of the member is changed, the third determining module 706 needs to determine whether the area list is updated. If the member is a last member of a group in the tracking area, the third determining module 706 determines that the area list is updated; otherwise, the third determining module 706 determines that the area list is not updated; and if the member is a first member of a group in a cell, the third determining module 706 determines that the area list is updated; otherwise, the third determining module 706 determines that the area list is not updated. Subsequently, the updating module 707 updates the area list. When the third determining module 706 determines that the area list is updated, the encapsulating module 710 is invoked to encapsulate the updated area list into a multimedia broadcast multicast service session update request message.

The sending module 711 is configured to: receive the multimedia broadcast multicast service session initiation request message and the multimedia broadcast multicast service session update request message, and send the multimedia broadcast multicast service session initiation request message or the multimedia broadcast multicast service session update request message to a multi-cell/multicast coordination entity.

During handover, if the receiving module 701 receives a handover request message sent by a user equipment, the MME serves as a source MME. In this case, the MME invokes the fourth determining module 708 to determine whether the user equipment is a last member of a group in a base station to which the user equipment belongs, and if a member that sends the handover request is the last member of the group, the updating module 707 is invoked to update the area list. When the third determining module 706 determines that the area list is updated, the encapsulating module 710 is invoked to encapsulate the updated area list into the multimedia broadcast multicast service session update request message. The sending module 711 sends the multimedia broadcast multicast service session update request message to the multi-cell/multicast coordination entity.

If the receiving module 701 receives a forwarding relocation request message, the MME serves as a target MME, and invokes the fifth determining module 709 to determine whether a user equipment is a first member of a group in a target cell, and if the user equipment is the first member of the group in the target cell, the updating module 707 is invoked to update the area list. When the third determining module 706 determines that the area list is updated, the encapsulating module 710 is invoked to encapsulate the updated area list into the multimedia broadcast multicast service session update request message. The sending module 711 sends the multimedia broadcast multicast service session update request message to the multi-cell/multicast coordination entity.

By using the foregoing solution, geographical limitation on the trunking communications can be broken, and members can perform trunking communications in a scope covered by an LTE network, which greatly improves flexibility of trunking communications.

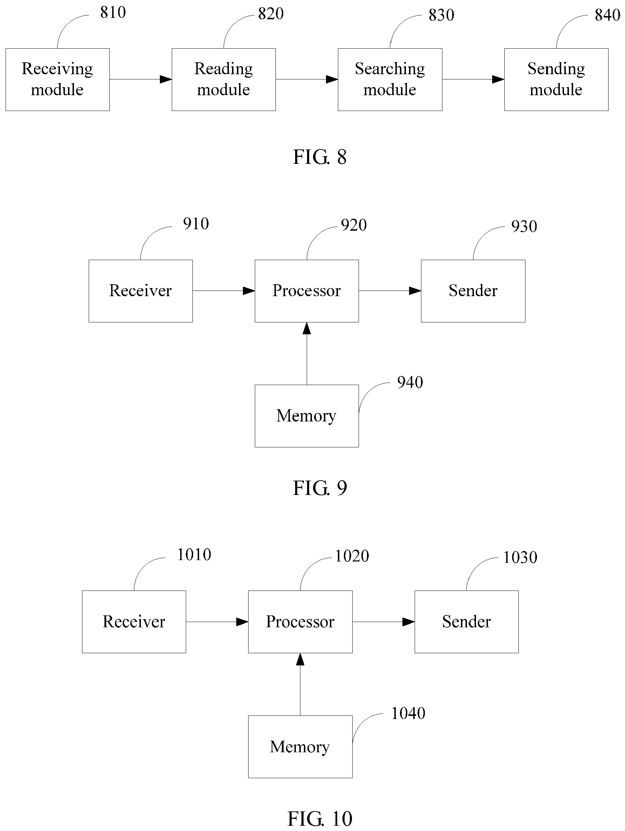

Refer to FIG. 8. FIG. 8 is a schematic structural diagram of an implementation manner of a multi-cell/multicast coordination entity according to the present invention. The multi-cell/multicast coordination entity according to this implementation manner includes a receiving module 810, a reading module 820, a searching module 830, and a sending module 840.

When an MME sends a multimedia broadcast multicast service session initiation request message to an MCE, the receiving module 810 is configured to receive the multimedia broadcast multicast service session initiation request message sent by the mobility management entity, and the receiving module 810 sends the multimedia broadcast multicast service session initiation request message to the reading module 820, where the multimedia broadcast multicast service session initiation request message carries an area list and a multicast address.

The reading module 820 is configured to: receive the multimedia broadcast multicast service session initiation request message, and read the area list from the multimedia broadcast multicast service session initiation request message, and the reading module 820 sends the area list to the searching module 830. For example, in trunking communications based on a fixed area, the reading module 820 reads a cell list, which serves as the area list, from the multimedia broadcast multicast service session initiation request message; and in trunking communications based on a mobile area, the reading module 820 reads a cell list and a tracking area list, which serve as the area list, from the multimedia broadcast multicast service session initiation request message.

The searching module 830 is configured to: receive the area list, and search for a corresponding base station according to the area list, and the searching module 830 sends a found base station to the sending module 840. For example, in trunking communications based on a fixed area, the searching module 830 finds, according to the cell list, a base station that belongs to the cell list; and in trunking communications based on a mobile area, the searching module 830 finds, according to the cell list, a base station that belongs to the cell list, and searches, according to the tracking area list, for a base station that belongs to the tracking area list.

The sending module 840 is configured to: receive the found base station, and send the multimedia broadcast multicast service session initiation request message to the base station, so that the base station is able to join the multicast address, thereby implementing group area management.

When the MME sends a multimedia broadcast multicast service session update request message to the MCE, the receiving module 810 is configured to receive the multimedia broadcast multicast service session update request message sent by the mobility management entity, and the receiving module 810 sends the multimedia broadcast multicast service session update request message to the reading module 820.

The reading module 820 is configured to: receive the multimedia broadcast multicast service session update request message, and read an updated area list from the multimedia broadcast multicast service session update request message.

The searching module 830 receives the updated cell area; if a base station in the obtained updated area list already exists, the searching module 830 searches for the base station and sends a resource release indication; if a base station in the obtained updated cell list does not exist, the searching module 830 searches for a corresponding base station, and sends the multimedia broadcast multicast service session initiation request message (excluding the cell list and the tracking area list) to the base station; if a tracking area in the obtained updated tracking list already exists, the searching module 830 performs no processing; and if a tracking area in the obtained updated tracking area list does not exist, the searching module 830 finds a corresponding base station, and sends the multimedia broadcast multicast service session initiation request message (excluding the cell list and the tracking area list) to the base station in the tracking area.

By using the foregoing solution, geographical limitation on the trunking communications can be broken, and members can perform trunking communications in a scope covered by an LTE network, which greatly improves flexibility of trunking communications.

Refer to FIG. 9. FIG. 9 is a schematic structural diagram of still another implementation manner of a mobility management entity according to the present invention. The mobility management entity according to this implementation manner includes a receiver 910, a processor 920, a sender 930, and a memory 940. The processor 920 is coupled to the receiver 910, the sender 930, and the memory 940.

The receiver 910 is configured to receive a group identifier and a member list that are sent by a trunking management unit, and a multicast address generated by a multimedia broadcast multicast service gateway. For example, serving as a speaker, a member in a group in an area covered by an LTE network puts forward a group call request to the trunking management unit. After receiving the group call request, the trunking management unit obtains a group identifier of the group, and queries information about all members of the group locally to obtain the member list. The trunking management unit encapsulates the group identifier and a cell list into a group call session request message, and sends the message to an MBMS gateway. After receiving the group call session request message, the MBMS gateway generates a multicast address for the group, encapsulates the multicast address, the group identifier, and the member list into a group session initiation request message, and sends the message to the MME. Then the receiver 910 receives the group session initiation request message and hence receives the group identifier and the member list that are sent by the trunking management unit, and the multicast address generated by the multimedia broadcast multicast service gateway.

After receiving the group session initiation request message, the MME generates an initial area list in three manners. In a first manner, the processor 920 immediately generates the initial area list after receiving the member list, where "immediately" means within a shortest time for the MME to react without undergoing any other steps after the MME receives the member list. In a second manner, the processor 920 determines whether all members are in a connected state, and if not all the members are in the connected state, the MME keeps waiting until all the members are in the connected state; if all the members are in the connected state, the MME generates the cell list according to a cell in which connected-state members is located, and uses the cell list as an area list. In a third manner, the processor 920 determines whether a set time is exceeded; if the set time is exceeded, the processor 920 queries a state of a member by querying the member list, generates, according to the cell in which the connected-state member is located, a cell list that belongs to an area list, and generates, according to the tracking area in which the idle-state member is located, a tracking area list that belongs to the area list, and uses the cell list and the tracking area list as the area list. The processor 920 encapsulates the multicast address and the generated area list into the multimedia broadcast multicast service session initiation request message, and sends the multimedia broadcast multicast service session initiation request message to the sender 930.

After sending the multimedia broadcast multicast service session initiation request message, the processor 920 queries whether the state of the member is changed, and when the state of the member is changed, determines whether the area list is updated. For example, when a member of a group that originally belongs to the tracking area changes from an idle state to a connected state, the MME needs to determine whether the area list is updated. In this case, the processor 920 queries whether the state of the member is changed, and if the state of the member is changed, the processor 920 determines whether the area list is updated. If the member is a last member of a group in the tracking area, it is determined that the area list is updated; otherwise, it is determined that the area list is not updated; and if the member is a first member of a group in a cell, it is determined that the area list is updated; otherwise, it is determined that the area list is not updated. When determining that the area list is updated, the processor 920 encapsulates the updated area list into a multimedia broadcast multicast service session update request message.

The sender 930 is configured to: receive the multimedia broadcast multicast service session initiation request message and the multimedia broadcast multicast service session update request message, and send the multimedia broadcast multicast service session initiation request message or the multimedia broadcast multicast service session update request message to an MCE.

The memory 940 is configured to store a routine and data.

During handover, if the receiver 910 receives a handover request message sent by a user equipment, the MME serves as a source MME. In this case, the processor 920 determines whether the user equipment is a last member of a group in a base station to which the user equipment belongs, and if a member that sends the handover request is the last member of the group, the processor 920 updates the area list. When determining that the area list is updated, the processor 920 encapsulates the updated area list into the multimedia broadcast multicast service session update request message. The sender 930 sends the multimedia broadcast multicast service session update request message to the MCE.

If the receiver 910 receives a forwarding relocation request message, the MME serves as a target MME, and the processor 920 determines whether a user equipment is a first member of a group in a target cell, and if the user equipment is the first member of the group in the target cell, the processor 920 updates the area list. When determining that the cell list is updated, the processor 920 encapsulates the updated area list into the multimedia broadcast multicast service session update request message. The sender 930 sends the multimedia broadcast multicast service session update request message to the multi-cell/multicast coordination entity.

By using the foregoing solution, geographical limitation on the trunking communications can be broken, and members can perform trunking communications in a scope covered by an LTE network, which greatly improves flexibility of trunking communications.

Refer to FIG. 10. FIG. 10 is a schematic structural diagram of another implementation manner of a multi-cell/multicast coordination entity according to the present invention. The multi-cell/multicast coordination entity according to this implementation manner includes a receiver 1010, a processor 1020, a sender 1030, and a memory 1040. The processor 1020 is coupled to the receiver 1010, the sender 1030, and the memory 1040 .

When an MME sends a multimedia broadcast multicast service session initiation request message to an MCE, the receiver 1010 is configured to receive the multimedia broadcast multicast service session initiation request message sent by the mobility management entity, and the receiver 1010 sends the multimedia broadcast multicast service session initiation request message to the processor 1020, where the multimedia broadcast multicast service session initiation request message carries an area list and a multicast address.

The processor 1020 is configured to: receive the multimedia broadcast multicast service session initiation request message, and read the area list from the multimedia broadcast multicast service session initiation request message. For example, in trunking communications based on a fixed area, the processor 1020 reads a cell list, which serves as the area list, from the multimedia broadcast multicast service session initiation request message; and in trunking communications based on a mobile area, the processor 1020 reads a cell list and a tracking area list, which serve as the area list, from the multimedia broadcast multicast service session initiation request message. The processor 1020 searches for a corresponding base station according to the area list, and the processor 1020 sends a found base station to the sender 1030. For example, in trunking communications based on a fixed area, the processor 1020 finds a base station that belongs to the cell list according to the cell list; and in trunking communications based on a mobile area, the processor 1020 searches for a base station that belongs to the cell list according to the cell list, and searches for a base station that belongs to the tracking area list according to the tracking area list.

The sender 1030 is configured to: receive the found base station, and send the multimedia broadcast multicast service session initiation request message to the base station, so that the base station is able to join the multicast address, thereby implementing group area management.

The memory 1040 is configured to store a program and data.

When the MME sends a multimedia broadcast multicast service session update request message to the MCE, the receiver 1010 is configured to receive the multimedia broadcast multicast service session update request message sent by the mobility management entity, and the receiver 1010 sends the multimedia broadcast multicast service session update request message to the processor 1020.

The processor 1020 is configured to: receive the multimedia broadcast multicast service session update request message, and read an updated area list from the multimedia broadcast multicast service session update request message. If a base station in the obtained updated cell list already exists, the processor 1020 searches for the base station and sends a resource release indication by using a sender 1030; if the base station in the obtained updated cell list does not exist, the processor 1020 searches for a corresponding base station, and uses the sender 1030 to send the multimedia broadcast multicast service session initiation request message (excluding the cell list and the tracking area list) to the base station; if a tracking area in the obtained updated tracking list already exists, the processor 1020 performs no processing; and if the tracking area in the obtained updated tracking area list does not exist, the processor 1020 finds a corresponding base station, and uses the sender 1030 to send the multimedia broadcast multicast service session initiation request message (excluding the cell list and the tracking area list) to the base station in the tracking area.

By using the foregoing solution, geographical limitation on the trunking communications can be broken, and members can perform trunking communications in a scope covered by an LTE network, which greatly improves flexibility of trunking communications.

Based on the foregoing mobility management entity and multi-cell/multicast coordination entity, this application further provides a group area management system, including a trunking management unit, a multimedia broadcast multicast service gateway, a mobility management entity, a multi-cell/multicast coordination entity, and a base station, where the trunking management unit is coupled to the multimedia broadcast multicast service gateway, the mobility management entity, and the base station, the multimedia broadcast multicast service gateway is coupled to the mobility management entity and the base station, the mobility management entity is coupled to the multi-cell/multicast coordination entity and the base station, the multi-cell/multicast coordination entity is coupled to the base station. For details, refer to the foregoing description, and no repeated description is given herein.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A group area management method, comprising:
receiving (S201), by a mobility management entity, MME, a multicast address generated by a multimedia broadcast multicast service, MBMS, gateway;
encapsulating (S202), by the MME, the multicast address and an area list into an MBMS session initiation request message, wherein the area list is a cell list or the area list comprises a cell list and a tracking area list; and
sending (S203), by the MME, the MBMS session initiation request message to a multi-cell/multicast coordination entity, MCE, so that the MCE finds a corresponding base station according to the area list and sends the MBMS session initiation request message to the corresponding base station, and the base station is able to join the multicast address.

2. The method according to claim 1, wherein the method comprises:
receiving, by the MME, a group identifier sent by a trunking management unit; and
encapsulating, by the MME, the group identifier into the MBMS session initiation request message, so that the MCE sends the group identifier to a user equipment in a cell through the base station, and the user equipment determines whether to establish a connection with the base station.

3. The method according to claim 1, wherein before encapsulating the multicast address and the area list into the MBMS session initiation request message, the method comprises:
receiving, by the MME, the cell list sent by a trunking management unit, and using the cell list as the area list; or
receiving, by the MME, a member list sent by a trunking management unit; and querying a state of a member according to the member list, generating the cell list according to a cell in which a connected-state member is located, generating the tracking area list according to a tracking area in which an idle-state member is located, and using the cell list and the tracking area list as the area list.

4. The method according to claim 3, wherein after sending the MBMS session initiation request message to the MCE, the method further comprises:
determining, by the MME, whether the area list is updated; and
when the area list is updated, encapsulating, by the MME, the updated area list into an MBMS session update request message, and sending the MBMS session update request message to the MCE.

5. The method according to claim 1, wherein the MBMS session initiation request message sent by the MCE to the corresponding base station excludes the area list.

6. A group area management method, comprising:
receiving (S301), by a multi cell/multicast coordination entity, MCE, a multimedia broadcast multicast service, MBMS, session initiation request message sent by a mobility management entity, MME, wherein the MBMS session initiation request message carries an area list and a multicast address, and the area list is a cell list or the area list comprises a cell list and a tracking area list;
reading (S302), by the MCE, the area list from the MBMS session initiation request message; and
searching (S303), by the MCE, for a corresponding base station according to the area list, and sending the MBMS session initiation request message to the base station, so that the base station is able to join the multicast address.

7. The method according to claim 6, wherein reading the area list from the MBMS session initiation request message comprises:
reading the cell list and the tracking area list from the MBMS session initiation request message; and
searching for the corresponding base station according to the area list comprises:
searching, according to the cell list, for a base station that belongs to the cell list, and searching, according to the tracking area list, for a base station that belongs to the tracking area list.

8. The method according to claim 7, wherein the method further comprises:
receiving an MBMS session update request message sent by the MME; and
reading an updated area list from the MBMS session update request message.

9. The method according to claim 6, wherein the MBMS session initiation request message sent to the base station excludes the area list.

10. A mobility management entity, MME, comprising a receiving module (601, 701), an encapsulating module (602, 710), and a sending module (603, 711), wherein:
the receiving module (601, 701) is configured to: receive a multicast address generated by a multimedia broadcast multicast service, MBMS, gateway, and send the multicast address to the encapsulating module (602, 710);
the encapsulating module (602, 710) is configured to: receive the multicast address, encapsulate the multicast address and an area list into an MBMS session initiation request message, and send the MBMS session initiation request message to the sending module (603, 711), wherein the area list is a cell list or the area list comprises a cell list and a tracking area list; and
the sending module (603, 711) is configured to: receive the MBMS session initiation request message, and send the MBMS session initiation request message to a multi-cell/multicast coordination entity, MCE, so that the MCE finds a corresponding base station according to the area list and sends the MBMS session initiation request message to the corresponding base station, and the base station is able to join the multicast address.

11. The MME according to claim 10, wherein:
the receiving module (601, 701) is further configured to: receive a group identifier sent by a trunking management unit, and send the group identifier to the encapsulating module (602, 710);
the encapsulating module (602, 710) is further configured to: encapsulate the group identifier into the MBMS session initiation request message, and send the MBMS session initiation request message to the sending module (603, 711); and
the sending module (603, 711) is configured to: receive the MBMS session initiation request message, and send the MBMS session initiation request message to the MCE, so that the MCE sends the group identifier to a user equipment in a cell through the base station, and the user equipment determines whether to establish a connection with the base station.

12. The MME according to claim 10, wherein:
the receiving module (701) is further configured to receive the cell list sent by a trunking management unit, and use the cell list as the area list.

13. The MME according to claim 10, wherein the MME further comprises a generating module (704);
the receiving module (701) is further configured to: receive a member list sent by a trunking management unit, and send the member list to the generating module (704); and
the generating module (704) is configured to: receive the member list, query a state of a member according to the member list, generate the cell list according to a cell in which a connected-state member is located, generate the tracking area list according to a tracking area in which an idle-state member is located, and use the cell list and the tracking area list as the area list.

14. The MME according to claim 13, wherein the generating module (704) is configured to:
after receiving the member list, immediately query the state of the member according to the member list, generate the cell list according to the cell in which the connected-state member is located, and generate the tracking area list according to the tracking area in which the idle-state member is located; or
when all members are in a connected state, generate the cell list according to a cell in which connected-state members are located, wherein the MME further comprises a first determining module (702) configured to: query the state of the member according to the member list, determine whether all the members are in the connected state, and send a first determining result to the generating module (704); or
when a set time is exceeded, query the state of the member according to the member list, generate the cell list according to the cell in which the connected-state member is located, and generate the tracking area list according to the tracking area in which the idle-state member is located, wherein the MME further comprises a second determining module (703) configured to determine whether the set time is exceeded and send a second determining result to the generating module (704).

15. The MME according to claim 13, wherein the MME further comprises a third determining module (706);
the third determining module (706) is configured to determine whether the area list is updated, and send a third determining result to the encapsulating module (710);
the encapsulating module (710) is further configured to: receive the third determining result, and when the area list is updated, encapsulate the updated area list into an MBMS session update request message, and send the MBMS session update request message to the sending module (711); and
the sending module (711) is further configured to: receive the MBMS session update request message, and send the MBMS session update request message to the MCE.

16. The MME according to claim 10, wherein the MBMS session initiation request message sent by the MCE to the corresponding base station excludes the area list.

17. A multi-cell/multicast coordination entity, MCE, comprising a receiving module (810), a reading module (820), a searching module (830), and a sending module (840), wherein:
the receiving module (810) is configured to: receive a multimedia broadcast multicast service, MBMS, session initiation request message sent by a mobility management entity, MME, and send the MBMS session initiation request message to the reading module (820), wherein the MBMS session initiation request message carries an area list and a multicast address, and the area list is a cell list or the area list comprises a cell list and a tracking area list;
the reading module (820) is configured to: receive the MBMS session initiation request message, read the area list from the MBMS session initiation request message, and send the area list to the searching module (830);
the searching module (830) is configured to: receive the area list, search for a corresponding base station according to the area list, and send a found base station to the sending module (840); and
the sending module (840) is configured to: receive the found base station, and send the MBMS session initiation request message to the base station, so that the base station is able to join the multicast address.

18. The MCE according to claim 17, wherein:
the reading module (820) is configured to: read a cell list and a tracking area list from the MBMS session initiation request message, and send the cell list and the tracking area list to the searching module (830); and
the searching module (830) is configured to: receive the cell list and the tracking area list, and search, according to the cell list, for a base station that belongs to the cell list, and search, according to the tracking area list, for a base station that belongs to the tracking area list.

19. The MCE according to claim 17, wherein:
the receiving module (810) is further configured to: receive an MBMS session update request message sent by the MME, and send the MBMS session update request message to the reading module (820); and
the reading module (820) is further configured to: receive the MBMS session update request message, and read an updated cell list and an updated tracking area list from the MBMS session update request message.

20. The MCE according to claim 17, wherein the MBMS session initiation request message sent to the base station excludes the area list.

## Patentansprüche

1. Gruppenbereichsverwaltungsverfahren, umfassend:
Empfangen (S201) durch eine Mobilitätsverwaltungsinstanz, MME, einer Multicast-Adresse, die von einem Multimedia-Broadcast-Multicast-Dienst(MBMS)-Gateway erzeugt wird;
Verkapseln (S202) durch die MME der Multicast-Adresse und einer Bereichsliste in eine MBMS-Sitzungseinleitungsanforderungsnachricht, wobei die Bereichsliste eine Zellenliste ist, oder die Bereichsliste eine Zellenliste und eine Verfolgungsbereichsliste umfasst; und
Senden (S203) durch die MME der MBMS-Sitzungseinleitungsanforderungsnachricht an eine Mehrzellen-/Multicast-Koordinationsinstanz, MCE, damit die MCE eine entsprechende Basisstation gemäß der Bereichsliste ermittelt und die MBMS-Sitzungseinleitungsanforderungsnachricht an die entsprechende Basisstation sendet, und die Basisstation sich der Multicast-Adresse anschließen kann.

2. Verfahren nach Anspruch 1, wobei das Verfahren umfasst:
Empfangen durch die MME einer Gruppenkennung, die von einer Bündelungsverwaltungseinheit gesendet wird; und
Verkapseln durch die MME der Gruppenkennung in die MBMS-Sitzungseinleitungsanforderungsnachricht, so dass die MCE die Gruppenkennung durch die Basisstation an eine Benutzereinrichtung in einer Zelle sendet, und die Benutzereinrichtung bestimmt, ob eine Verbindung mit der Basisstation hergestellt werden soll.

3. Verfahren nach Anspruch 1, wobei das Verfahren vor dem Verkapseln der Multicast-Adresse und der Bereichsliste in die MBMS-Sitzungseinleitungsanforderungsnachricht umfasst:
Empfangen durch die MME der Zellenliste, die von einer Bündelungsverwaltungseinheit gesendet wird, und Verwenden der Zellenliste als die Bereichsliste; oder
Empfangen durch die MME einer Mitgliedsliste, die von einer Bündelungsverwaltungseinheit gesendet wird; und Abfragen eines Zustands eines Mitglieds gemäß der Mitgliedsliste, Erzeugen der Zellenliste gemäß einer Zelle, in welcher sich ein Mitglied im verbundenen Zustand befindet, Erzeugen der Verfolgungsbereichsliste gemäß einem Verfolgungsbereich, in welchem sich ein Mitglied im Ruhezustand befindet, und Verwenden der Zellenliste und der Verfolgungsbereichsliste als die Bereichsliste.

4. Verfahren nach Anspruch 3, wobei das Verfahren nach dem Senden der MBMS-Sitzungseinleitungsanforderungsnachricht an die MCE ferner umfasst:
Bestimmen durch die MME, ob die Bereichsliste aktualisiert ist; und
Verkapseln durch die MME, wenn die Bereichsliste aktualisiert ist, der aktualisierten Bereichsliste in eine MBMS-Sitzungsaktualisierungsanforderungsnachricht und Senden der MBMS-Sitzungsaktualisierungsanforderungsnachricht an die MCE.

5. Verfahren nach Anspruch 1, wobei die von der MCE an die entsprechende Basisstation gesendete MBMS-Sitzungseinleitungsanforderungsnachricht die Bereichsliste ausschließt.

6. Gruppenbereichsverwaltungsverfahren, umfassend:
Empfangen (S301) durch eine Mehrzellen-/Multicast-Koordinationsinstanz, MCE, einer Multimedia-Broadcast-Multicast-Dienst, MBMS,-Sitzungseinleitungsanforderungsnachricht, die von einer Mobilitätsverwaltungsinstanz, MME, gesendet wird, wobei die MBMS-Sitzungseinleitungsanforderungsnachricht eine Bereichsliste und eine Multicast-Adresse mitführt, und die Bereichsliste eine Zellenliste ist, oder die Bereichsliste eine Zellenliste und eine Verfolgungsbereichsliste umfasst;
Auslesen (S302) durch die MCE der Bereichsliste aus der MBMS-Sitzungseinleitungsanforderungsnachricht; und
Suchen (S303) durch die MCE nach einer entsprechenden Basisstation gemäß der Bereichsliste und Senden der MBMS-Sitzungseinleitungsanforderungsnachricht an die Basisstation, damit die Basisstation sich der Multicast-Adresse anschließen kann.

7. Verfahren nach Anspruch 6, wobei das Auslesen der Bereichsliste aus der MBMS-Sitzungseinleitungsanforderungsnachricht umfasst:
Auslesen der Zellenliste und der Verfolgungsbereichsliste aus der MBMS-Sitzungseinleitungsanforderungsnachricht; und
das Suchen nach der entsprechenden Basisstation gemäß der Bereichsliste umfasst:
Suchen gemäß der Zellenliste nach einer Basisstation, die zur Zellenliste gehört, und Suchen gemäß der Verfolgungsbereichsliste nach einer Basisstation, die zur Verfolgungsbereichsliste gehört.

8. Verfahren nach Anspruch 7, wobei das Verfahren ferner umfasst:
Empfangen einer MBMS-Sitzungsaktualisierungsanforderungsnachricht, die durch die MME gesendet wird; und
Auslesen einer aktualisierten Bereichsliste aus der MBMS-Sitzungsaktualisierungsnachricht.

9. Verfahren nach Anspruch 6, wobei die an die Basisstation gesendete MBMS-Sitzungseinleitungsanforderungsnachricht die Bereichsliste ausschließt.

10. Mobilitätsverwaltungsinstanz, MME, umfassend ein Empfangsmodul (601, 701), ein Verkapselungsmodul (602, 710), und ein Sendemodul (603, 711), wobei:
das Empfangsmodul (601, 701) konfiguriert ist zum: Empfangen einer Multicast-Adresse, die von einem Multimedia-Broadcast-Multicast-Dienst(MBMS)-Gateway erzeugt wird, und Senden der Multicast-Adresse an das Verkapselungsmodul (602, 710);
das Verkapselungsmodul (602, 710) konfiguriert ist zum: Empfangen der Multicast-Adresse, Verkapseln der Multicast-Adresse und einer Bereichsliste in eine MBMS-Sitzungseinleitungsanforderungsnachricht und Senden der MBMS-Sitzungseinleitungsanforderungsnachricht an das Sendemodul (603, 711), wobei die Bereichsliste eine Zellenliste ist, oder die Bereichsliste eine Zellenliste und eine Verfolgungsbereichsliste umfasst; und
das Sendemodul (603, 711) konfiguriert ist zum: Empfangen der MBMS-Sitzungseinleitungsanforderungsnachricht und Senden der MBMS-Sitzungseinleitungsanforderungsnachricht an eine Mehrzellen-/Multicast-Koordinationsinstanz, MCE, damit die MCE eine entsprechende Basisstation gemäß der Bereichsliste ermittelt und die MBMS-Sitzungseinleitungsanforderungsnachricht an die entsprechende Basisstation sendet, und die Basisstation sich der Multicast-Adresse anschließen kann.

11. MME nach Anspruch 10, wobei:
das Empfangsmodul (601, 701) ferner konfiguriert ist zum: Empfangen einer Gruppenkennung, die von einer Bündelungsverwaltungseinheit gesendet wird, und Senden der Gruppenkennung an das Verkapselungsmodul (602, 710);
das Verkapselungsmodul (602, 710) ferner konfiguriert ist zum: Verkapseln der Gruppenkennung in die MBMS-Sitzungseinleitungsanforderungsnachricht und Senden der MBMS-Sitzungseinleitungsanforderungsnachricht an das Sendemodul (603, 711); und
das Sendemodul (603, 711) konfiguriert ist zum: Empfangen der MBMS-Sitzungseinleitungsanforderungsnachricht und Senden der MBMS-Sitzungseinleitungsanforderungsnachricht an die MCE, so dass die MCE die Gruppenkennung durch die Basisstation an eine Benutzereinrichtung in einer Zelle sendet, und die Benutzereinrichtung bestimmt, ob eine Verbindung mit der Basisstation hergestellt werden soll.

12. MME nach Anspruch 10, wobei:
das Empfangsmodul (701) ferner so konfiguriert ist, dass es die Zellenliste, die von einer Bündelungsverwaltungseinheit gesendet wird, empfängt und die Zellenliste als die Bereichsliste verwendet.

13. MME nach Anspruch 10, wobei die MME ferner ein Erzeugungsmodul (704) umfasst;
das Empfangsmodul (701) ferner konfiguriert ist zum: Empfangen einer Mitgliedsliste, die von einer Bündelungsverwaltungseinheit gesendet wird, und Senden der Mitgliedsliste an das Erzeugungsmodul (704); und
das Erzeugungsmodul (704) konfiguriert ist zum: Empfangen der Mitgliedsliste, Abfragen eines Zustands eines Mitglieds gemäß der Mitgliedsliste, Erzeugen der Zellenliste gemäß einer Zelle, in welcher sich ein Mitglied im verbundenen Zustand befindet, Erzeugen der Verfolgungsbereichsliste gemäß einem Verfolgungsbereich, in welchem sich ein Mitglied im Ruhezustand befindet, und Verwenden der Zellenliste und der Verfolgungsbereichsliste als die Bereichsliste.

14. MME nach Anspruch 13, wobei das Erzeugungsmodul (704) konfiguriert ist zum:
unverzüglichen Abfragen nach Empfang der Mitgliedsliste des Zustands des Mitglieds gemäß der Mitgliedsliste, Erzeugen der Zellenliste gemäß der Zelle, in welcher sich das Mitglied im verbundenen Zustand befindet, und Erzeugen der Verfolgungsbereichsliste gemäß dem Verfolgungsbereich, in welchem sich das Mitglied im Ruhezustand befindet; oder
Erzeugen, wenn alle Mitglieder in einem verbundenen Zustand sind, der Zellenliste gemäß einer Zelle, in welcher sich Mitglieder im verbundenen Zustand befinden, wobei die MME ferner ein erstes Bestimmungsmodul (702) umfasst, das konfiguriert ist zum: Abfragen des Zustands des Mitglieds gemäß der Mitgliedsliste, Bestimmen, ob alle Mitglieder im verbundenen Zustand sind, und Senden eines ersten Bestimmungsergebnisses an das Erzeugungsmodul (704); oder
Abfragen bei Überschreiten einer festgelegten Zeit des Zustands des Mitglieds gemäß der Mitgliedsliste, Erzeugen der Zellenliste gemäß der Zelle, in welcher sich das Mitglied im verbundenen Zustand befindet, und Erzeugen der Verfolgungsliste gemäß dem Verfolgungsbereich, in welchem sich das Mitglied im Ruhezustand befindet, wobei die MME ferner ein zweites Bestimmungsmodul (703) umfasst, das so konfiguriert ist, dass es bestimmt, ob die festgelegte Zeit überschritten ist, und ein zweites Bestimmungsergebnis an das Erzeugungsmodul (704) sendet.

15. MME nach Anspruch 13, wobei die MME ferner ein drittes Bestimmungsmodul (706) umfasst:
das dritte Bestimmungsmodul (706) so konfiguriert ist, dass es bestimmt, ob die Bereichsliste aktualisiert ist, und ein drittes Bestimmungsergebnis an das Verkapselungsmodul (710) sendet;
das Verkapselungsmodul (710) ferner konfiguriert ist zum: Empfangen des dritten Bestimmungsergebnisses und Verkapseln, wenn die Bereichsliste aktualisiert ist, der aktualisierten Bereichsliste in eine MBMS-Sitzungsaktualisierungsanforderungsnachricht und Senden der MBMS-Sitzungsaktualisierungsanforderungsnachricht an das Sendemodul (711); und
das Sendemodul (711) ferner konfiguriert ist zum: Empfangen der MBMS-Sitzungsaktualisierungsanforderungsnachricht und Senden der MBMS-Sitzungsaktualisierungsanforderungsnachricht an die MCE.

16. MME nach Anspruch 10, wobei die von der MCE an die entsprechende Basisstation gesendete MBMS-Sitzungseinleitungsanforderungsnachricht die Bereichsliste ausschließt.

17. Mehrzellen-/Multicast-Koordinationsinstanz, MCE, umfassend ein Empfangsmodul (810), eine Lesemodul (820), ein Suchmodul (830) und ein Sendemodul (840), wobei:
das Empfangsmodul (810) konfiguriert ist zum: Empfangen einer Multimedia-Broadcast-Multicast-Dienst(MBMS)-Sitzungseinleitungsanforderungsnachricht, die von einer Mobilitätsverwaltungsinstanz, MME, gesendet wird, und Senden der MBMS-Sitzungseinleitungsanforderungsnachricht an das Lesemodul (820), wobei die MBMS-Sitzungseinleitungsanforderungsnachricht eine Bereichsliste und eine Multicast-Adresse mitführt, und die Bereichsliste eine Zellenliste ist, oder die Bereichsliste eine Zellenliste und eine Verfolgungsbereichsliste umfasst;
das Lesemodul (820) konfiguriert ist zum: Empfangen der MBMS-Sitzungseinleitungsanforderungsnachricht, Auslesen der Bereichsliste aus der MBMS-Sitzungseinleitungsanforderungsnachricht und Senden der Bereichsliste an das Suchmodul (830);
das Suchmodul (830) konfiguriert ist zum: Empfangen der Bereichsliste, Suchen nach einer entsprechenden Basisstation gemäß der Bereichsliste und Senden einer ermittelten Basisstation an das Sendemodul (840); und
das Sendemodul (840) konfiguriert ist zum: Empfangen der ermittelten Basisstation und Senden der MBMS-Sitzungseinleitungsanforderungsnachricht an die Basisstation, damit die Basisstation sich der Multicast-Adresse anschließen kann.

18. MCE nach Anspruch 17, wobei:
das Lesemodul (820) konfiguriert ist zum: Auslesen einer Zellenliste und einer Verfolgungsbereichsliste aus der MBMS-Sitzungseinleitungsanforderungsnachricht und Senden der Zellenliste und der Verfolgungsbereichsliste an das Suchmodul (830); und
das Suchmodul (830) konfiguriert ist zum: Empfangen der Zellenliste und der Verfolgungsbereichsliste und Suchen gemäß der Zellenliste nach einer Basisstation, die zur Zellenliste gehört, und Suchen gemäß der Verfolgungsbereichsliste nach einer Basisstation, die zur Verfolgungsbereichsliste gehört.

19. MCE nach Anspruch 17, wobei:
das Empfangsmodul (810) ferner konfiguriert ist zum: Empfangen einer MBMS-Sitzungsaktualisierungsanforderungsnachricht, die von der MME gesendet wird, und Senden der MBMS-Sitzungsaktualisierungsanforderungsnachricht an das Lesemodul (820); und
das Lesemodul (820) ferner konfiguriert ist zum: Empfangen der MBMS-Sitzungsaktualisierungsanforderungsnachricht und Auslesen einer aktualisierten Zellenliste und einer aktualisierten Verfolgungsbereichsliste aus der MBMS-Sitzungsaktualisierungsanforderungsnachricht.

20. MCE nach Anspruch 17, wobei die an die Basisstation gesendete MBMS-Sitzungseinleitungsanforderungsnachricht die Bereichsliste ausschließt.

## Revendications

1. Procédé de gestion de zones de groupe, comprenant les étapes suivantes :
recevoir (S201), par une entité de gestion de la mobilité, MME, une adresse de multidiffusion générée par une passerelle de service de diffusion multidiffusion multimédia, MBMS ;
encapsuler (S202), par la MME, l'adresse de multidiffusion et une liste de zones dans un message de requête d'initiation de session MBMS, la liste de zones étant une liste de cellules ou la liste de zones comportant une liste de cellules et une liste de zones de poursuite ; et
envoyer (S203), par la MME, le message de requête d'initiation de session MBMS à une entité de coordination multi-cellule/multidiffusion, MCE, pour que la MCE trouve une station de base correspondante selon la liste de zones et envoie le message de requête d'initiation de session MBMS à la station de base correspondante, et que la station de base puisse joindre l'adresse de multidiffusion.

2. Procédé selon la revendication 1, dans lequel le procédé comprend les étapes suivantes :
recevoir, par la MME, un identifiant de groupe envoyé par une unité de gestion des liaisons ; et
encapsuler, par la MME, l'identifiant de groupe dans le message de requête d'initiation de session MBMS, pour que la MCE envoie l'identifiant de groupe à un équipement utilisateur dans une cellule par l'intermédiaire de la station de base, et que l'équipement utilisateur détermine s'il faut établir une connexion avec la station de base.

3. Procédé selon la revendication 1 dans lequel, avant l'étape consistant à encapsuler l'adresse de multidiffusion et la liste de zones dans le message de requête d'initiation de session MBMS, le procédé comprend :
recevoir, par la MME, la liste de cellules envoyée par une unité de gestion des liaisons, et utiliser la liste de cellules comme la liste de zones ; ou
recevoir, par la MME, une liste de membres envoyée par une unité de gestion des liaisons ; et demander un état d'un membre selon la liste de membres, générer la liste de cellules selon une cellule dans laquelle un membre à l'état connecté est situé, générer la liste de zones de poursuite selon une zone de poursuite dans laquelle un membre à l'état inactif est situé, et utiliser la liste de cellules et la liste de zones de poursuite comme la liste de zones.

4. Procédé selon la revendication 3 dans lequel, après l'étape consistant à envoyer le message de requête d'initiation de session MBMS à la MCE, le procédé comprend en outre :
déterminer, par la MME, si la liste de zones est mise à jour ; et
lorsque la liste de zones est mise à jour, encapsuler, par la MME, la liste de zones mise à jour dans un message de requête de mise à jour de session MBMS, et envoyer le message de requête de mise à jour de session MBMS à la MCE.

5. Procédé selon la revendication 1, dans lequel le message de requête d'initiation de session MBMS envoyé par la MCE à la station de base correspondante exclut la liste de zones.

6. Procédé de gestion de zones de groupe, comprenant les étapes suivantes :
recevoir (S301), par une entité de coordination multi-cellule/multidiffusion, MCE, un message de requête d'initiation de session de service de diffusion multidiffusion multimédia, MBMS, envoyé par une entité de gestion de la mobilité, MME, le message de requête d'initiation de session MBMS contenant une liste de zones et une adresse de multidiffusion, et la liste de zones étant une liste de cellules ou la liste de zones comportant une liste de cellules et une liste de zones de poursuite ;
lire (S302), par la MCE, la liste de zones à partir du message de requête d'initiation de session MBMS ; et
rechercher (S303), par la MCE, une station de base correspondante selon la liste de zones, et envoyer le message de requête d'initiation de session MBMS à la station de base, pour que la station de base puisse joindre l'adresse de multidiffusion.

7. Procédé selon la revendication 6, dans lequel l'étape consistant à lire la liste de zones à partir du message de requête d'initiation de session MBMS comprend :
lire la liste de cellules et la liste de zones de poursuite à partir du message de requête d'initiation de session MBMS ; et
l'étape consistant à rechercher la station de base correspondante selon la liste de zones comprend :
rechercher, selon la liste de cellules, une station de base qui appartient à la liste de cellules, et rechercher, selon la liste de zones de poursuite, une station de base qui appartient à la liste de zones de poursuite.

8. Procédé selon la revendication 7, dans lequel le procédé comprend en outre :
recevoir un message de requête de mise à jour de session MBMS envoyé par la MME ; et
lire une liste de zones mise à jour à partir du message de requête de mise à jour de session MBMS.

9. Procédé selon la revendication 6, dans lequel le message de requête d'initiation de session MBMS envoyé à la station de base exclut la liste de zones.

10. Entité de gestion de la mobilité, MME, comprenant un module de réception (601, 701), un module d'encapsulation (602, 710), et un module d'envoi (603, 711), dans laquelle :
le module de réception (601, 701) est configuré pour: recevoir une adresse de multidiffusion générée par une passerelle de service de diffusion multidiffusion multimédia, MBMS, et envoyer l'adresse de multidiffusion au module d'encapsulation (602, 710) ;
le module d'encapsulation (602, 710) est configuré pour : recevoir l'adresse de multidiffusion, encapsuler l'adresse de multidiffusion et une liste de zones dans un message de requête d'initiation de session MBMS, et envoyer le message de requête d'initiation de session MBMS au module d'envoi (603, 711), la liste de zones étant une liste de cellules ou la liste de zones comportant une liste de cellules et une liste de zones de poursuite ; et
le module d'envoi (603, 711) est configuré pour : recevoir le message de requête d'initiation de session MBMS, et envoyer le message de requête d'initiation de session MBMS à une entité de coordination multi-cellule/multidiffusion, MCE, pour que la MCE trouve une station de base correspondante selon la liste de zones et envoie le message de requête d'initiation de session MBMS à la station de base correspondante, et que la station de base puisse joindre l'adresse de multidiffusion.

11. MME selon la revendication 10, dans laquelle :
le module de réception (601, 701) est en outre configuré pour : recevoir un identifiant de groupe envoyé par une unité de gestion des liaisons, et envoyer l'identifiant de groupe au module d'encapsulation (602, 710) ;
le module d'encapsulation (602, 710) est en outre configuré pour : encapsuler l'identifiant de groupe dans le message de requête d'initiation de session MBMS, et envoyer le message de requête d'initiation de session MBMS au module d'envoi (603, 711) ; et
le module d'envoi (603, 711) est configuré pour : recevoir le message de requête d'initiation de session MBMS, et envoyer le message de requête d'initiation de session MBMS à la MCE, pour que la MCE envoie l'identifiant de groupe à un équipement utilisateur dans une cellule par l'intermédiaire de la station de base, et que l'équipement utilisateur détermine s'il faut établir une connexion avec la station de base.

12. MME selon la revendication 10, dans laquelle :
le module de réception (701) est en outre configuré pour recevoir la liste de cellules envoyée par une unité de gestion des liaisons, et utiliser la liste de cellules comme la liste de zones.

13. MME selon la revendication 10, dans laquelle la MME comprend en outre un module de génération (704) ;
le module de réception (701) est en outre configuré pour: recevoir une liste de membres envoyée par une unité de gestion des liaisons, et envoyer la liste de membres au module de génération (704) ; et
le module de génération (704) est configuré pour : recevoir la liste de membres, demander un état d'un membre selon la liste de membres, générer la liste de cellules selon une cellule dans laquelle un membre à l'état connecté est situé, générer la liste de zones de poursuite selon une zone de poursuite dans laquelle un membre à l'état inactif est situé, et utiliser la liste de cellules et la liste de zones de poursuite comme la liste de zones.

14. MME selon la revendication 13, dans laquelle le module de génération (704) est configuré pour :
après avoir reçu la liste de membres, demander immédiatement l'état du membre selon la liste de membres, générer la liste de cellules selon la cellule dans laquelle le membre à l'état connecté est situé, et générer la liste de zones de poursuite selon la zone de poursuite dans laquelle le membre à l'état inactif est situé ; ou
lorsque tous les membres sont dans un état connecté, générer la liste de cellules selon une cellule dans laquelle des membres à l'état connecté sont situés, la MME comprenant en outre un premier module de détermination (702) configuré pour :
demander l'état du membre selon la liste de membres, déterminer si tous les membres sont dans l'état connecté, et envoyer un premier résultat de détermination au module de génération (704) ; ou
lorsqu'un temps défini est excédé, demander l'état du membre selon la liste de membres, générer la liste de cellules selon la cellule dans laquelle le membre à l'état connecté est situé, et générer la liste de zones de poursuite selon la zone de poursuite dans laquelle le membre à l'état inactif est situé, la MME comprenant en outre un deuxième module de détermination (703) configuré pour déterminer si le temps défini est excédé et envoyer un deuxième résultat de détermination au module de génération (704).

15. MME selon la revendication 13, dans laquelle la MME comprend en outre un troisième module de détermination (706) ;
le troisième module de détermination (706) est configuré pour déterminer si la liste de zones est mise à jour, et envoyer un troisième résultat de détermination au module d'encapsulation (710) ;
le module d'encapsulation (710) est en outre configuré pour : recevoir le troisième résultat de détermination, et lorsque la liste de zones est mise à jour, encapsuler la liste de zones mise à jour dans un message de requête de mise à jour de session MBMS, et envoyer le message de requête de mise à jour de session MBMS au module d'envoi (711) ; et
le module d'envoi (711) est en outre configuré pour : recevoir le message de requête de mise à jour de session MBMS, et envoyer le message de requête de mise à jour de session MBMS à la MCE.

16. MME selon la revendication 10, dans laquelle le message de requête d'initiation de session MBMS envoyé par la MCE à la station de base correspondante exclut la liste de zones.

17. Entité de coordination multi-cellule/multidiffusion, MCE, comprenant un module de réception (810), un module de lecture (820), un module de recherche (830), et un module d'envoi (840), dans laquelle :
le module de réception (810) est configuré pour : recevoir un message de requête d'initiation de session de service de diffusion multidiffusion multimédia, MBMS, envoyé par une entité de gestion de la mobilité, MME, et envoyer le message de requête d'initiation de session MBMS au module de lecture (820), le message de requête d'initiation de session MBMS contenant une liste de zones et une adresse de multidiffusion, et la liste de zones étant une liste de cellules ou la liste de zones comportant une liste de cellules et une liste de zones de poursuite ;
le module de lecture (820) est configuré pour : recevoir le message de requête d'initiation de session MBMS, lire la liste de zones à partir du message de requête d'initiation de session MBMS et envoyer la liste de zones au module de recherche (830) ;
le module de recherche (830) est configuré pour : recevoir la liste de zones, rechercher une station de base correspondante selon la liste de zones, et envoyer une station de base trouvée au module d'envoi (840) ; et
le module d'envoi (840) est configuré pour : recevoir la station de base trouvée, et envoyer le message de requête d'initiation de session MBMS à la station de base, pour que la station de base puisse joindre l'adresse de multidiffusion.

18. MCE selon la revendication 17, dans laquelle :
le module de lecture (820) est configuré pour : lire une liste de cellules et une liste de zones de poursuite à partir du message de requête d'initiation de session MBMS, et envoyer la liste de cellules et la liste de zones de poursuite au module de recherche (830) ; et
le module de recherche (830) est configuré pour : recevoir la liste de cellules et la liste de zones de poursuite, et rechercher, selon la liste de cellules, une station de base qui appartient à la liste de cellules, et rechercher, selon la liste de zones de poursuite, une station de base qui appartient à la liste de zones de poursuite.

19. MCE selon la revendication 17, dans laquelle :
le module de réception (810) est en outre configuré pour : recevoir un message de requête de mise à jour de session MBMS envoyé par la MME, et envoyer le message de requête de mise à jour de session MBMS au module de lecture (820) ; et
le module de lecture (820) est en outre configuré pour : recevoir le message de requête de mise à jour de session MBMS, et lire une liste de cellules mise à jour et une liste de zones de poursuite mise à jour à partir du message de requête de mise à jour de session MBMS.

20. MCE selon la revendication 17, dans laquelle le message de requête d'initiation de session MBMS envoyé à la station de base exclut la liste de zones.
